# EUROPEAN PATENT APPLICATION

(11) **EP 4 431 979 A1**
(43) Date of publication of application: **18.09.2024**
(21) Application number: 24156562.1
(22) Date of filing: 08.02.2024
(51) Int. Cl.: G01S 7/487, G01S 7/497

(54) **CIRCUIT, METHOD, AND RADAR FOR DETECTING AMBIENT LIGHT**

(30) Priority: 16.03.2023 CN 202310316097
(71) Applicant: Suteng Innovation Technology Co., Ltd., Shenzhen Guangdong (CN)
(72) Inventor: Gong, Changsheng, Shenzhen (CN); Wang, Jiaxin, Shenzhen (CN)
(74) Representative: RGTH

(57) **Abstract**

The present application relates to a circuit, a method, and a radar for detecting ambient light. The circuit for detecting ambient light comprises: a photosensitive element, which is configured to convert a received light signal into a current signal; an electrical signal conditioning circuit, coupled to the photosensitive element, which is configured to convert the current signal into a voltage signal; a demodulation processing unit, coupled to the electrical signal conditioning circuit, which is configured to convert the voltage signal into a digital signal based on a voltage threshold; and a digital processing unit, coupled to the demodulation processing unit, which is configured to process the digital signal to obtain ambient light information. The present application is capable of detecting ambient light, improving the anti-sunlight noise ability of a LiDAR, enhancing the accuracy of detection results of the LiDAR, and further improving personal and property safety of users.

## Description

### TECHNICAL FIELD

This application relates to the field of computer technology, and more particularly, to a circuit, a method, and a radar for detecting ambient light.

### BACKGROUND

With the rapid development of computer technology, information technology, and more, auxiliary driving and autonomous driving functions are entering the daily lives of the public. Taking automatic driving technology as an example, radars are capable of collecting environmental information so that a decision-making system for automatic driving can adopt a driving strategy adapted to the environmental information, such as obstacle avoidance.

However, it is found that ambient light has a relatively large influence on the detection results of LiDARs, and it is difficult for related technologies to improve the anti-sunlight noise capability of LiDARs on the basis of low cost and low power consumption, and it is difficult to improve the accuracy of the detection results of the LiDARs.

### SUMMARY

To solve or part of solve the problems in the related art, the present application provides a circuit, method, and radar for detecting ambient light, which can detect ambient light, improve the anti sunlight noise capability of a LiDAR, enhance the accuracy of detection results of the LiDAR, and further improve personal and property safety of users.

In a first aspect, the present application provides a circuit for detecting ambient light, which includes a photosensitive component, an electrical signal conditioning circuit, a detection processing unit, and a digital processing unit. The photosensitive component is configured to convert a received light signal into an current signal; the electrical signal conditioning circuit is coupled to the photosensitive component and configured to convert the current signal into a voltage signal; the detection processing unit is coupled to the electrical signal conditioning circuit and configured to convert the voltage signal into a digital signal based on a voltage threshold; and the digital processing unit is coupled to the detection processing unit and configured to process the digital signal to obtain ambient light information.

In a second aspect, the present application provides a radar, which includes the circuit for detecting ambient light and a processor. The circuit for detecting ambient light is configured to obtain ambient light information; the processor is coupled to the circuit for detecting ambient light and configured to process a received light signal based on the ambient light information to reduce interference of the ambient light with the light signal.

In a third aspect, the present application provides a method for detecting ambient light, which includes: converting a received light signal into an current signal; converting the current signal into a voltage signal; converting the voltage signal into a digital signal based on a voltage threshold; and processing the digital signal to obtain ambient light information.

In a fourth aspect, the present application provides an electronic apparatus, which includes a processor and a memory. Executable codes are stored in the memory. When executed by the processor, the executable codes cause the processor to execute the method according to any one of the above aspects.

In a fifth aspect, the present application provides a computer-readable storage medium on which executable codes are stored. When executed by a processor of an electronic apparatus, the executable codes cause the processor to execute the method according to any one of the above aspects.

In a sixth aspect, the present application provides a computer program product, which includes executable codes. When executed, the executable codes implement the method according to any one of the above aspects.

The embodiments of the technologies provided in the present application can have the following advantageous effects:

In some embodiments of the present application, a photosensitive component is adopted to convert a light signal into an current signal, and the current signal is converted into a digital signal based on a voltage threshold to reduce interference of ambient light with a laser. The sampling of ambient light is implemented without using an analog-to-digital converter (ADC) sampling, thereby simplifying circuit design, reducing costs, and lowering power consumption.

Moreover, in some embodiments, the digital processing unit superimposes digital signals in M time units in a start time-aligned manner to obtain an ambient light digital signal. This can effectively improve the influence of ambient light on the laser in high-light and light-polluted environments.

It should be understood that the general and specific descriptions above are merely exemplary and explanatory and are not restrictive to the present application.

### BRIEF DESCRIPTION OF THE DRAWINGS

By combining the accompanying drawings, a more detailed description of exemplary embodiments of the present application will be given, and the above and other objects, features, and advantages of the present application will become more apparent. In the exemplary embodiments of the present application, the same reference numerals generally denote the same parts.
FIG. 1 is a schematic diagram of an application scenario of a circuit, method, and radar for detecting ambient light according to an embodiment of the present application.
FIG. 2 is another schematic diagram of an application scenario of a circuit, method, and radar for detecting ambient light according to an embodiment of the present application.
FIG. 3 is a block diagram of a circuit for detecting ambient light according to an embodiment of the present application.
FIG. 4 is a block diagram of an electrical signal conditioning circuit according to an embodiment of the present application.
FIG. 5 is a schematic diagram of the principle of electrical signal conditioning according to an embodiment of the present application.
FIG. 6 is a block diagram of another circuit for detecting ambient light according to an embodiment of the present application.
FIG. 7 is a schematic diagram of superimposing digital signals in M time units according to an embodiment of the present application.
FIG. 8 is a flowchart of an operation for detecting ambient light according to an embodiment of the present application.
FIG. 9 is a schematic diagram of data filtering according to an embodiment of the present application.
FIG. 10 is another schematic diagram of data filtering according to an embodiment of the present application.
FIG. 11 is a block diagram of another circuit for detecting ambient light according to an embodiment of the present application.
FIG. 12 is a flowchart of accumulation based on the number according to an embodiment of the present application.
FIG. 13 is a flowchart of accumulation based on the width value according to an embodiment of the present application.
FIG. 14 is a schematic diagram of accumulation based on the number according to an embodiment of the present application.
FIG. 15 is a schematic diagram of accumulation based on the width value according to an embodiment of the present application.
FIG. 16 is a flowchart of a method for detecting ambient light according to an embodiment of the present application.
FIG. 17 is a structural schematic diagram of a radar according to an embodiment of the present application.
FIG. 18 is a structural schematic diagram of an electronic apparatus according to an embodiment of the present application.

### DESCRIPTION

The detailed description of the embodiments of the present application will be given with reference to the drawings. It should be understood that the embodiments of the present application can be implemented in various forms, and should not be construed as limited to the embodiments set forth herein. On the contrary, these embodiments are provided to fully convey the scope of the present application to those skilled in the art.

The terms used in the present application are for the purpose of describing specific embodiments and are not intended to limit the present application. The singular forms "a" and "an" as used herein and in the claims are intended to include the plural forms as well, unless the context clearly indicates otherwise. It should also be understood that the terms "and/or" used in this document refer to any or all possible combinations of one or more of the associated listed items.

It should be understood that although the terms "first," "second," "third," etc., may be used herein to describe various elements, these elements should not be limited to these terms. These terms are only used to distinguish one type of information from another. For example, without departing from the scope of the application, the first information can also be referred to as the second information, and similarly, the second information can also be referred to as the first information. Accordingly, features having "first" and "second" limitations can explicitly or implicitly include one or more features. The meaning of "multiple" is two or more unless otherwise specifically limited.

To facilitate understanding of the present application, some concepts relevant to the present application will be explained first.

LiDAR (Light Detection and Ranging): It can be used for remote sensing, military, vehicular, etc. For example, a vehicular LiDAR has a detection range of 200 to 500 meters and identifiable physical properties may only include distance and reflectivity, and can be used for small machines such as vehicles and robots. Vehicular LiDARs include vehicular LiDAR, vehicular millimeter-wave radar, and vehicular ultrasonic radar.

Vehicular LiDAR: By emitting an outgoing light (such as a laser beam) having a wavelength of about 900 nm, the outgoing light is reflected by an obstacle, and a processing unit calculates the distance between the obstacle and the vehicular LiDAR according to a time difference between the reflected light and the outgoing light. However, the reflected light received by the LiDAR is interfered by ambient light. The degree of interference of the ambient light on the received reflected light under strong light and weak light is different, and a processing method such as compensation is required to reduce the interference of the ambient light.

The processing unit of the LiDAR can estimate the reflectivity of a target according to a cross-sectional situation of a signal of the reflected light obtained after the reflected light is received. It is helpful to improve the accuracy of estimating the reflectivity of the target by reducing the interference of the ambient light. Vehicular LiDARs have a small size and high integration.

Artificial intelligence (AI) is a comprehensive technology in computer science. Among them, the development of autonomous driving technology is particularly rapid. Autonomous driving technology includes many technologies such as high-precision maps, environmental perception, behavioral decision-making, path planning, and motion control, and has a wide range of applications.

In the scenario of autonomous driving, the system architecture applicable to the scenario of autonomous driving can include a mobile device, a network, and a cloud. Among them, the network includes a wired network, a wireless network, and the like, and the present application is not limited thereto.

The cloud can include a server cluster composed of multiple physical servers or a distributed system. The cloud can be a cloud server providing basic cloud computing services such as cloud services, cloud databases, cloud computing, cloud functions, cloud storage, network services, cloud communications, middleware services, domain services, security services, content delivery (CDN), as well as big data and artificial intelligence platforms.

Mobile devices include but are not limited to: vehicles, ships, robots, aircraft, and the like. Sensors and other electronic devices can be provided on the mobile device to obtain information about obstacles in the surrounding environment of the mobile device. The electronic devices can include: radar (including LiDAR), image sensors, and the like.

The embodiments of the present application provide a circuit, method, and radar for detecting ambient light. A photoelectric conversion is performed on a photosensitive element, and then a digital signal is output after being conditioned by an electrical signal circuit and subjected to detection processing. A digital processing unit superimposes the digital signal according to time, number, or pulse width, to obtain an ambient light result after filtering. By implementing sampling of the ambient light without using a traditional sampling method, the circuit design is simplified, and the cost and power consumption are reduced, thereby ensuring personal and property safety of users.

The technical solution of an embodiment of the present application will be described in detail below with reference to the drawings.

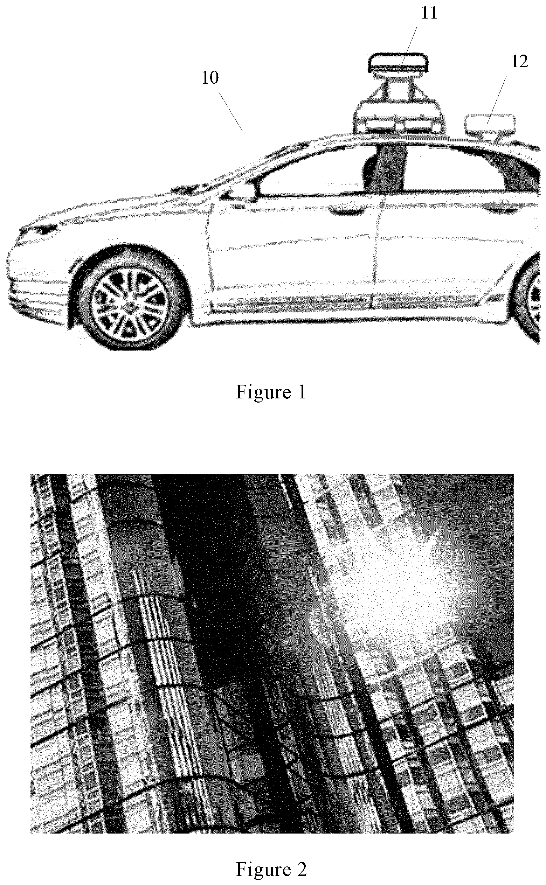

FIG. 1 is a schematic diagram of an application scenario of a circuit, a method, and a radar for detecting ambient light according to an embodiment of the present application.

FIG. 1 illustrates a hardware configuration of a vehicle 10 supporting advanced driver assistance systems (ADAS) or autonomous driving functions. For example, at least one Light Detection and Ranging (LiDAR) 11 is mounted on a roof and/or a side of a body of the vehicle 10. A detection area of the LiDAR 11 can be fixed, such that the LiDAR 11 is only used to detect a preset area. The detection area of the LiDAR 11 can be adjustable, such that a LiDAR on the body can scan multiple detection areas by adjusting postures, or can scan multiple detection areas by adjusting a field of view angle range of the LiDAR itself. Specifically, the vehicle 10 can be equipped with five LiDARs 11: the top of the vehicle, the front side of the vehicle, the rear side of the vehicle, the left side of the vehicle, and the right side of the vehicle. By using multiple LiDARs 11, contours of objects in an area around the vehicle and distances to the objects can be detected.

Additionally, a shooting device can also be mounted on the vehicle 10. The shooting device can shoot an environment in front of a field of view at a specified angle. For example, the shooting device can be a monocular camera, a binocular camera, and the like.

Further, a plurality of millimeter-wave radars can be mounted around the vehicle 10. For example, the vehicle 10 is equipped with four millimeter-wave radars to set the left front of the vehicle, the right front of the vehicle, the left rear of the vehicle, and the right rear of the vehicle as detection ranges. By the millimeter-wave radars, distances to objects in respective detection areas can be detected, and relative velocities of the objects to the vehicle 10 can be detected.

Furthermore, a positioning device 12, such as a Beidou positioning device, a Global Positioning System (GPS), and the like, can be mounted on the vehicle 10. A current position of the vehicle 10 can be determined by the positioning device 12.

Additionally, an electronic control unit (ECU) can be mounted on the vehicle 10. Detection signals of at least one of the LiDAR 11, the millimeter-wave radar, and the positioning device 12 are sent to the ECU. The ECU can detect and identify obstacles (such as barriers around the vehicle 10, moving objects, trees, adjacent vehicles, and the like) based on these signals. Additionally, the ECU can be functionally divided into multiple units in physical terms, and the present application collectively refers to them as the ECU.

It should be noted that although the mobile device is described as a car, such a description is not limiting, and various mobile devices are applicable, such as land robots, water robots, and the like. The circuit, method, and radar for detecting ambient light according to an embodiment of the present application can be applied to any one or more electronic devices applicable to the LiDAR.

FIG. 2 is a schematic diagram of another application scenario of a circuit, a method, and a radar for detecting ambient light according to an embodiment of the present application.

FIG. 2 illustrates an application scenario in urban roads. In order to enhance the aesthetics of the facades of some office buildings, a large number of glass products are used. These glass products have a high reflectivity, and the outer surfaces of the buildings are not smooth. These factors lead to the presence of transient high-intensity reflected sunlight and the like shining on a receiver of a LiDAR, affecting information such as an object's reflectivity determined by the received reflected light in the LiDAR, thereby affecting the detection accuracy of the LiDAR. Additionally, the illumination of headlights of oncoming vehicles can also affect the detection accuracy of the LiDAR.

In application scenarios such as the above-mentioned ADAS, autonomous driving, and smart transportation, rapid and accurate perception of the surrounding environment of the mobile device is a key point.

Taking the scenario of autonomous driving of vehicles as an example for illustrative purposes. Coordinating road signal control according to vehicle position information, obstacle information, road information sensed by a sensing system, and the like, thereby improving the quality and efficiency of road management. Specifically, corresponding decisions of autonomous driving vehicles can be determined according to information sensed by the sensing system, and an inter-vehicle safe distance can be adjusted, so that vehicles can travel safely and reliably on roads.

As one of the most important sensors for autonomous driving, the LiDAR can provide the decision-making system with the most important information about the positions/sizes/motions of traffic participants in the field of smart transportation/autonomous driving. Because the LiDAR chip is equivalent to the eyes of an autonomous driving vehicle, how to improve the accuracy of the LiDAR recognition results is particularly important, directly related to the personal and property safety of occupants in the vehicle, and even to life and death.

However, the applicant has found that in application scenarios where ambient light needs to be detected frequently, it is necessary to adjust and control the LiDAR according to the environment to achieve better performance of the LiDAR in resisting sunlight noise and ranging capability. Related technologies utilize the LiDAR to detect ambient light in a manner using ADC sampling. However, related technologies require the use of an ADC chip, which not only complicates circuit design, but also results in relatively high overall cost and power consumption.

For the above reasons, the present application aims to provide a technical solution that can: improve the LiDAR's ability to resist sunlight noise on the basis of low cost and low power consumption, thereby improving the accuracy of the LiDAR's detection results. The present application effectively achieves sampling of ambient light without using the ADC sampling method, thereby simplifying circuit design, and reducing cost and power consumption.

For example, in some embodiments, an avalanche photodiode (APD) or a single-photon avalanche diode (SPAD) or other photosensitive sensors are used to perform photoelectric conversion, and then a circuit processes the signals, samples and processes the signals, and finally obtains the ambient light result, so that the influence of ambient light on the recognition results of the LiDAR can be filtered based on the ambient light result.

Additionally, in some embodiments, digital signals in M time units are superimposed in a manner aligned with a start time to obtain an ambient light digital signal. This can effectively utilize information about the light intensity at historical moments and/or future moments of a target moment to correct ambient light information at the target moment. While effectively eliminating the interference of sudden changes in ambient light, this embodiment can also effectively collect real-time ambient light information to reduce the interference of ambient light on the received reflected light, thereby improving the detection accuracy of the LiDAR.

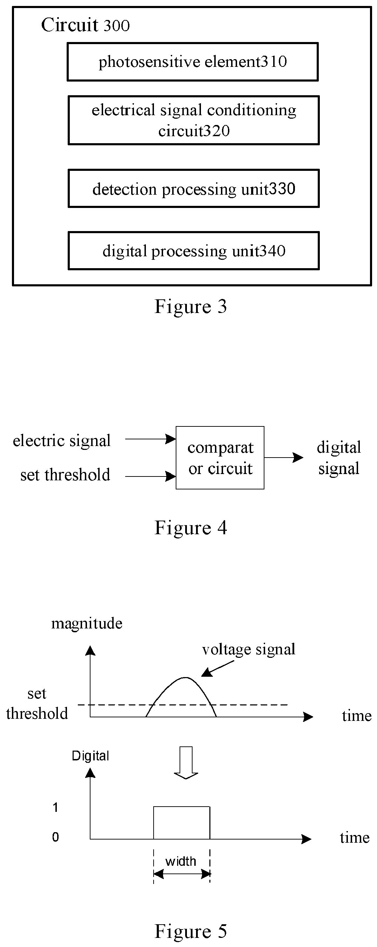

FIG. 3 is a block diagram of a circuit for detecting ambient light according to an embodiment of the present application.

Referring to FIG. 3, the circuit 300 for detecting ambient light may include a photosensitive element 310, an electrical signal conditioning circuit 320, a detection processing unit 330, and a digital processing unit 340.

The photosensitive element 310 is configured to convert a received light signal into a current signal. The photosensitive element 310 may be a photosensitive sensor, a sensitive device capable of responding to or converting an external light signal or light radiation. The photosensitive element 310 may include a photoelectric tube, a photoelectric multiplier tube, a photoresistor, a phototransistor, a solar cell, an infrared sensor, an ultraviolet sensor, a fiber optic photoelectric sensor, a color sensor, a charge-coupled device (CCD), a complementary metal-oxide-semiconductor (CMOS) image sensor, or the like. In some specific embodiments, the photosensitive element 310 may adopt APD or SPAD. It is to be understood that keeping a sensitive spectrum of the photosensitive element 310 consistent with a spectrum of a receiver of a LiDAR may help improve the identification effect of the LiDAR.

The light signal may be a light signal active generated by a light emitter, such as a light signal emitted by a light emitting diode (LED) under electrical excitation, a light signal emitted by a laser diode (LD) under electrical excitation or light excitation, or solar-emitted light waves. The light signal may be a light signal generated by reflected light, such as light signals generated by glass, metal, a mirror, and the like.

The electrical signal conditioning circuit 320 is coupled to the photosensitive element and configured to convert the current signal into a voltage signal. The converting of the current signal into the voltage signal, for subsequent signal processing. Additionally or alternatively, in order to facilitate subsequent signal processing, there may be integrated an amplification circuit or the like in the electrical signal conditioning circuit 320, to improve the signal-to-noise ratio of the signal. A circuit for converting the current signal into the voltage signal may be an IV conversion circuit. The IV conversion may be specifically implemented by utilizing a load resistor. For example, the current passing through the load resistor is collected, the resistance value of the resistor is fixed, an appropriate amplifier is designed according to U=I˙R. Then, the current signal is converted into the voltage signal.

The detection processing unit 330 is coupled to the electrical signal conditioning circuit and configured to convert the voltage signal into a digital signal based on a voltage threshold. In the present embodiment, the voltage threshold may be a preset threshold, which may be related to the above resistance value. For example, the range of I is [0, 2] mA, when I is 1 mA, it is considered that the light intensity corresponding to the current 1 mA may affect the detection result of the LiDAR. Then according to U=I˙R, the voltage threshold is set to R. For example, in a pulse time period, if the current voltage value is greater than or equal to the voltage threshold, the pulse value in the pulse time period is 1; and if the current voltage value is less than the voltage threshold, the pulse value in the pulse time period is 0. A digital signal can be obtained in the above manner.

The digital processing unit 340 is coupled to the detection processing unit and configured to process the digital signal to obtain ambient light information. For example, the magnitude of the digital signal may reflect the light intensity information of the ambient light. For example, the number of pulses of the digital signal may reflect the duration information of high light intensity of the ambient light. The ambient light information obtained in the above manner can better reflect the ambient light of the actual environment, so that the pre-processing of the light information collected by the LiDAR based on the ambient light information can improve the accuracy of the identification result.

In a specific embodiment, the photosensitive element 310 may be a photoelectric conversion element such as APD or SPAD. The electrical signal conditioning circuit 320 amplifies or shapes the electric signal output by the photosensitive element 310, so that the current or voltage is processed in an appropriate range. The detection processing unit includes a comparator circuit and a corresponding data generating unit, wherein the comparator circuit compares the electric signal with a set threshold, outputs different states according to whether the electric signal exceeds the set threshold, and then converts into a digital signal. The digital processing unit refers to receiving the digital signal output by the detection processing unit, processing the received digital signal, and finally obtaining the detection result of the ambient light.

In some embodiments, the photosensitive element is specifically configured to convert ambient light signals received in M time units into current signals. One time unit may include one or more pulse cycles.

Correspondingly, the digital processing unit is specifically configured to superimpose digital signals in M time units to obtain an ambient light digital signal.

For example, the photosensitive element 310 converts ambient light signals received in M time units into current signals. Then, the electrical signal conditioning circuit 320 converts the current signals in M time units into voltage signals. Then, the detection processing unit 330 converts the voltage signals in M time units into digital signals according to the voltage threshold. Then, the digital processing unit 340 superimposes the digital signals in M time units to obtain the ambient light digital signal.

In some embodiments, the detection processing unit 330 includes a threshold generating circuit, a comparison circuit, and a histogram generating circuit.

The threshold generating circuit is configured to output the voltage threshold. Specifically, the threshold generating circuit may be implemented by a first storage circuit. For example, the first storage circuit is configured to store the voltage threshold. The voltage threshold may be configurable, or may be fixed in the storage circuit, and is not limited herein. For example, the voltage threshold may be a fixed value, such as 3, 10, 15, 30, 50, 100, etc., in units of microvolts, millivolts, volts, etc. The voltage threshold may be a fixed range of values, such as 3-10, 8-50, 20-60, 10-100, etc., in units of microvolts, millivolts, volts, etc.

FIG. 4 is a block diagram of another circuit for detecting ambient light according to an embodiment of the present application.

Referring to FIG. 4, the comparison circuit is coupled to the electrical signal conditioning circuit and the threshold generating circuit respectively, and is configured to compare the voltage signal with the voltage threshold (set threshold) in each of M time units to obtain a comparison result. For example, the comparison circuit includes a first threshold comparing unit, and may specifically include: a first logic circuit, a first input end group, a first control end group, and a first output end group, where the first input end group is connected to the first storage circuit. The first logic circuit is configured to: in response to the voltage signal input from the first control end group, output the comparison result (pulse signal) from the first output end group when the voltage value of the voltage signal exceeds the first threshold. Referring to FIG. 5, the time period in the voltage signal corresponding to a voltage value greater than or equal to the set threshold corresponds to a high-level pulse, i.e., a digital signal "1"; the time period in the voltage signal corresponding to a voltage value less than the set threshold corresponds to a low-level pulse, i.e., a digital signal "0". In order to compare two numerical values, a combination of multiple logic operation circuits may be used, and a combination of multiple logic operation circuits may be used correspondingly, and the present disclosure is not limited thereto. Logic operations include but are not limited to: "OR", "AND", "NOT", "NOR", "NAND", "XOR", and the like.

The histogram generating circuit is coupled to the comparison circuit, and is configured to generate a histogram based on the comparison result to obtain the digital signal. Specifically, the histogram may be generated to obtain a statistical result through histogram statistics.

It is to be understood that the comparison circuit is implemented by a dedicated processor, constituted by a dedicated circuit including AND gates, NOT gates, NOR gates, XOR gates, shift circuits, and the like. The comparison calculation process may be implemented by a general-purpose processor, such as by comparison in a software manner. The comparison circuit may also be implemented by a combination of a dedicated processor and a general-purpose processor.

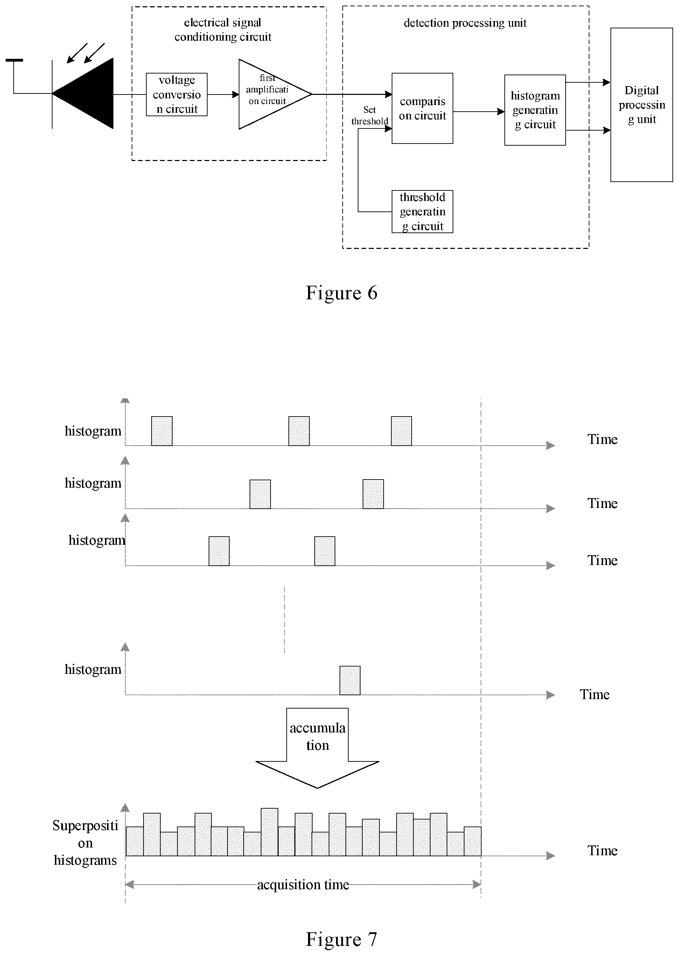

FIG. 6 is a block diagram of another circuit for detecting ambient light according to an embodiment of the present application.

Referring to FIG. 6, the electrical signal conditioning circuit 320 may include a voltage conversion circuit and a first amplification circuit.

The voltage conversion circuit (current-to-voltage circuit) is coupled to the photosensitive element and is configured to perform voltage conversion on a current signal in M time units from the photosensitive element. A feedback element of the current-to-voltage circuit may be any one or a combination of more than one of resistors, capacitors, and inductors. In a specific embodiment, in order to convert the current signal into the voltage signal, a resistor having a certain resistance value may be connected in series at a current output end. The voltage across two ends of the resistor is the converted voltage signal. In addition, specific instruments may be used to improve the accuracy and reliability of the conversion result through electronic circuit conversion.

The first amplification circuit is coupled to the voltage conversion circuit and configured to amplify a signal subjected to voltage conversion to obtain a voltage signal in M time units. The first amplification circuit can increase the output power of a signal. The amplification circuit obtains energy from a power source, controls the waveform of an output signal to be consistent with an input signal, enlarges the amplitude of the output signal, in order to obtain an output signal stronger than the input signal. For example, a common emitter amplification circuit, a common collector amplification circuit, and the like may be used.

In some embodiments, in order to further improve the signal-to-noise ratio of the output signal and reduce noise in an ambient light digital signal, the digital processing unit is further configured to filter the ambient light digital signal to obtain ambient light information.

In some embodiments, in order to improve the stability of the ambient light digital signal, eliminate interference to ambient light information such as instantaneous jump in light intensity, a hardware filtering method may be used. In order to simplify the hardware circuit, the present embodiment utilizes optimization of historical ambient light information and/or future ambient light information for specific moment ambient light information, without increasing hardware complexity, to reduce the jump of ambient light information, and ensure the accuracy of ambient light information. Specifically, ambient light mainly comes from sunlight. In a time period, ambient light should change continuously, and the jump is mainly interfered by specific reflected light (sunlight noise). In addition, the consistency of historical ambient light information and/or future ambient light information with specific moment ambient light information is good, and can reflect the real-time change of ambient light. Therefore, optimization of specific moment ambient light information based on historical ambient light information and/or future ambient light information can be performed.

In some embodiments, the digital processing unit is specifically configured to superimpose the digital signals in M time units in a manner aligned with a start time to obtain the ambient light digital signal.

In a specific embodiment, when detecting ambient light, the LiDAR does not emit laser, and the photosensitive element receives in time units. If the time for each reception is n, and the total number of receptions is m times. The m receptions are superimposed in a manner aligned with time. As shown in FIG. 7. Then data based on the time unit is obtained, and then the data is filtered to obtain ambient light data. This method of superimposing data histograms at different times, plus filtering processing, can obtain more realistic results of ambient light and avoid deviations in different scenes.

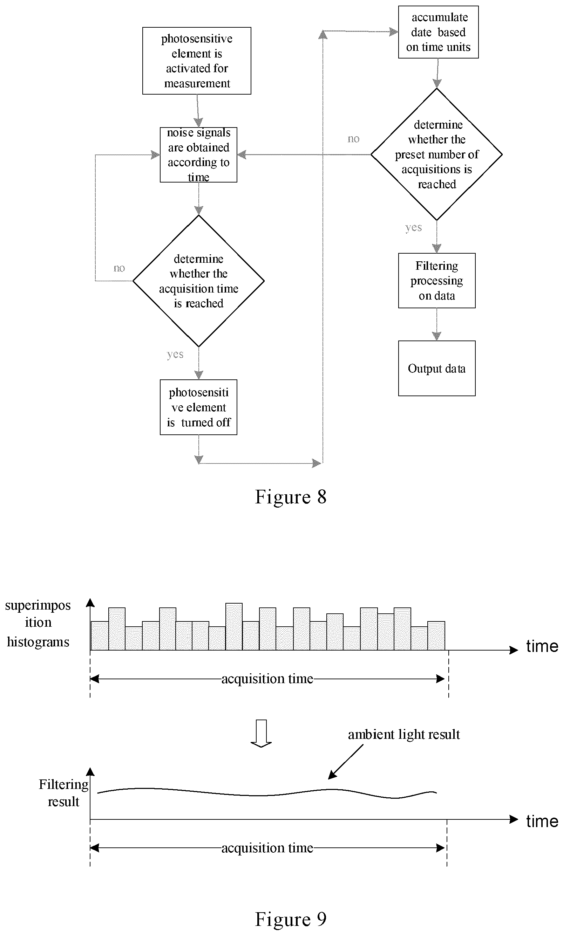

FIG. 8 is a flowchart of a method for detecting ambient light according to an embodiment of the present application.

Please refer to FIG. 6 and FIG. 8 together. First, the photosensitive element is activated for measurement, and then noise signals are obtained according to time. During the measurement process, it is determined whether the acquisition time is reached. If the acquisition time is not reached, the acquisition continues. After the acquisition time is reached, the photosensitive element is first turned off, and the measurement is stopped, and the data is accumulated based on time units. Then, it is determined whether the preset number of acquisitions is reached. If not, the photosensitive element is turned on again to continue the measurement. If the preset number of acquisitions is reached, the data is filtered. The positions of the two process modules of accumulating the data based on time units and determining whether the preset number of acquisitions is reached can be exchanged without affecting the overall operation.

FIG. 9 is a schematic diagram of filtering data according to an embodiment of the present application. Referring to FIG. 9, the filtering process may filter data accumulated after a single group. Various data filtering methods may be used, which may be specifically selected according to different measurement parameters. For example, a clipping filtering algorithm may be used. For example, median filtering may be used, in which a middle value is selected from N consecutive inputs of a certain parameter as a current sampling value. For example, sliding arithmetic mean filtering may be used, in which a cyclic queue is established, and multiple sampling values are stored in the cyclic queue in a first-in-first-out manner, an arithmetic mean of N data in the cyclic queue is calculated to obtain valid data of the current sampling. For example, anti-pulse interference average value filtering may be used, in which N consecutive samplings are performed, the maximum value and the minimum value are removed, an average value of the remaining data is then calculated, and the average value is taken as a valid value of the current sampling. In addition, low-pass digital filtering, debouncing filtering, and the like may be used.

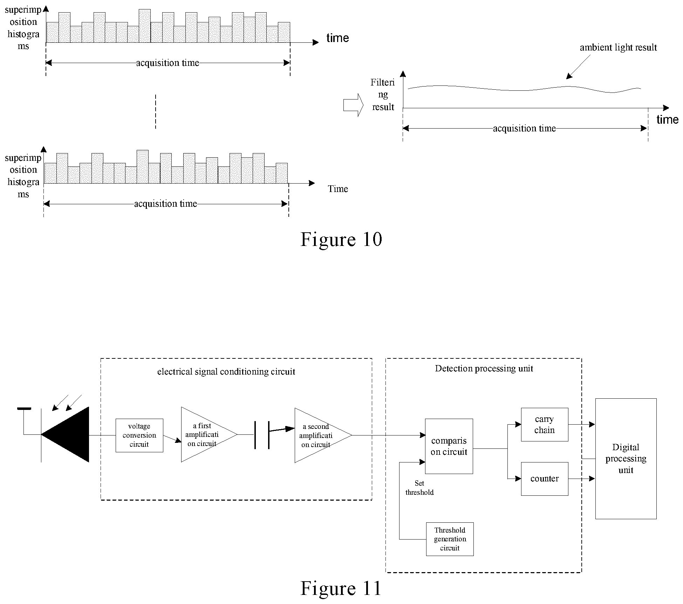

FIG. 10 is another schematic diagram of filtering data according to an embodiment of the present application. Referring to FIG. 10, the filtering process may also filter data accumulated after multiple groups. Specifically, the photosensitive element is further configured to output P groups of current signals, where each group of current signals includes current signals in M time units. Correspondingly, the digital processing unit is specifically configured to superimpose P groups of ambient light digital signals corresponding to P groups of current signals in a manner aligned with time, to obtain the ambient light digital signal.

The above has shown the determination of ambient light information through histograms. In addition, in order to improve the response speed, ambient light information can also be determined by signal accumulation.

FIG. 11 is a block diagram of another circuit for detecting ambient light according to an embodiment of the present application.

Referring to FIG. 11, the detection processing unit may include a threshold generating circuit, a comparison circuit, and an accumulation circuit.

The threshold generating circuit is configured to output a voltage threshold. Please refer to the relevant part of the threshold generating circuit mentioned above for details.

The comparison circuit is respectively coupled to the electrical signal conditioning circuit and the threshold generating circuit, and is configured to compare the voltage signal with the voltage threshold in each of M time units to obtain a comparison result. For example, the comparison circuit includes a second threshold comparing unit, and may specifically include: a second storage circuit and a second threshold comparison circuit. The second storage circuit is configured to store the second threshold. The second threshold may be a preset value or a value range. The second threshold may be editable. The second threshold comparison circuit includes a second logic circuit, a second input end group, a second control end group, and a second output end group, where the second input end group is connected to the second storage circuit. The second logic circuit is configured to: in response to the voltage signal input from the second control end group, output the comparison result from the second output end group when the voltage signal exceeds the second threshold.

The accumulation circuit is coupled to the comparison circuit, and is configured to obtain a digital signal based on an accumulation operation for the comparison result. In this embodiment, the accumulation circuit is used instead of the histogram generating circuit. The accuracy of the histogram result is better than that of the accumulation circuit result. However, calculating the histogram requires a more complex processing calculation, while the accumulation circuit, as compared with the histogram generating circuit, does not need to calculate the histogram, and only needs to perform operations such as counting the number of occurrences, and has the advantage of simple processing calculation.

In this embodiment, the photosensitive element performs photoelectric conversion, and then outputs a digital signal after the electrical signal circuit conditions, the detection processing unit outputs a digital signal after the detection, the digital processing unit accumulates the digital signal according to the number or duration, and selects whether to perform multiple samplings to obtain the final data result as needed.

In some embodiments, the accumulation circuit includes: a counter and/or a carry chain.

The counter is coupled to the comparison circuit, and is configured to count the number of pulses to obtain a digital signal. Taking an adder counter as an example, a binary adder counter is constituted by triggers. In addition, a subtractive counter may also be used for calculation. The counter may be implemented by a combination of multiple logic operation circuits. Taking counting by software as an example, the operation "n & (n - 1)" is repeatedly executed until n becomes 0. The function of the operation "n & (n - 1)" is to remove the last 1 of n, that is, the last 1 of n becomes 0. For example, let n = 11111, the counting process is as follows: n=11110, the count is 1; n=11100, the count is 2; n=11000, the count is 3; n=10000, the count is 4; n=00000, the count is 5.

For example, the carry chain is coupled to the comparison circuit, and is configured to perform an addition operation on pulse widths of the voltage signals in each of M time units. The carry chain provides a fast carry function between dedicated adders in an arithmetic mode. For example, a parallel carry chain refers to that carry signals in a parallel adder are generated simultaneously, also known as leading carry or skipping carry. The parallel carry chain can be divided into single-group grouping and double-group grouping, also known as parallel within the group and serial between the groups, and parallel within the group and parallel between the groups. Single-group skipping carry is to divide an n-bit full adder into several small groups, the carry within the group is generated simultaneously, and serial carry is used between groups, which is also called parallel within the group and serial between the groups. Double-group skipping carry is to divide an n-bit full adder into several large groups, each large group contains several small groups. The carry of the highest bit of each small group in each large group is generated simultaneously. Serial carry is used between large groups.

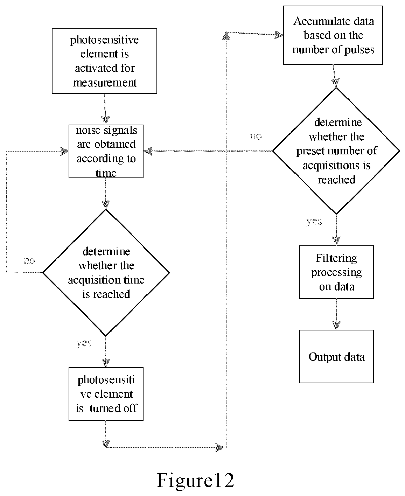

FIG. 12 is a flowchart of accumulating based on the number according to an embodiment of the present application.

The process of accumulating based on the number is exemplarily illustrated. Each time a high-level pulse appears, the number is accumulated by 1. Referring to FIG. 12, the photosensitive element is first activated for measurement, and then noise signals are obtained according to time. It is determined whether the acquisition time is reached. If the acquisition time is not reached, the acquisition continues. After the acquisition time is reached, the photosensitive element is first turned off for measurement, and the data is accumulated based on the number of pulses; then it is determined whether the preset number of acquisitions is reached. If not, the photosensitive element is turned on again to continue the measurement. If the preset number of acquisitions is reached, the data is filtered. The filtering process may filter data accumulated after a single group, or may filter data accumulated after multiple groups.

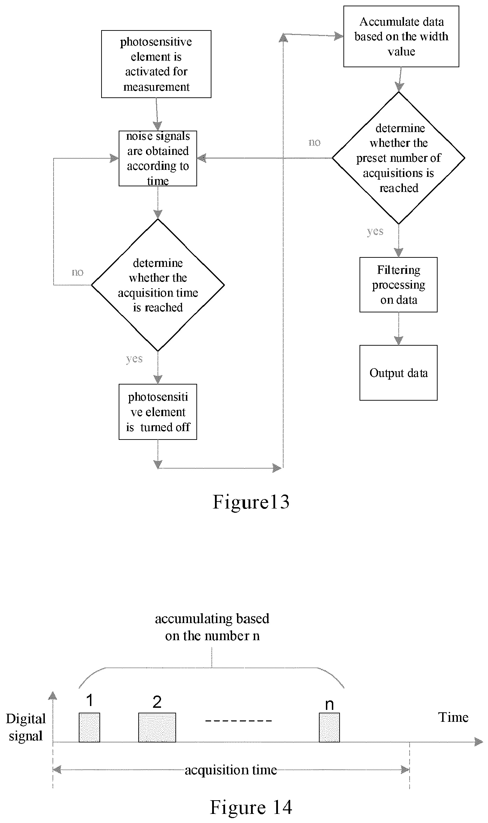

FIG. 13 is a flowchart of accumulating based on the width value according to an embodiment of the present application.

The process of accumulating based on the width value is exemplarily illustrated. The width value refers to the pulse width value of the electrical signal, such as the duration of the high-level pulse after being processed by the detection processing unit designed in the form of a comparator circuit; when the detection processing unit is designed in the form of an ADC circuit, it similarly refers to the width value of a digital signal exceeding a digital set threshold value. Specifically, each time a high-level pulse is detected, the duration of the high-level pulse is accumulated. Referring to FIG. 13, the photosensitive element is first activated for measurement, and then noise signals are obtained according to time. It is determined whether the acquisition time is reached. If the acquisition time is not reached, the acquisition continues. After the acquisition time is reached, the photosensitive element is first turned off for measurement, and the data is accumulated based on the width value; then it is determined whether the preset number of acquisitions is reached. If not, the photosensitive element is turned on again to continue the measurement. If the preset number of acquisitions is reached, the data is filtered. The filtering process may filter data accumulated after a single group, or may filter data accumulated after multiple groups. It is to be understood that the positions of the two process modules of accumulating the data based on the number of pulses and determining whether the acquisition time is reached can be exchanged without affecting the overall operation.

FIG. 14 is a schematic diagram of accumulating based on the number according to an embodiment of the present application.

Referring to FIG. 14, the number of width values in the sampling time is counted, denoted as n, and the value of the ambient light information is n. There are multiple environmental results for multiple measurements. One way of processing multiple samplings is to accumulate the results of multiple samplings, and then filter the results with multiple sets of data to obtain ambient light data. Another way is that multiple samplings are not accumulated, and the data is directly filtered to obtain ambient light data.

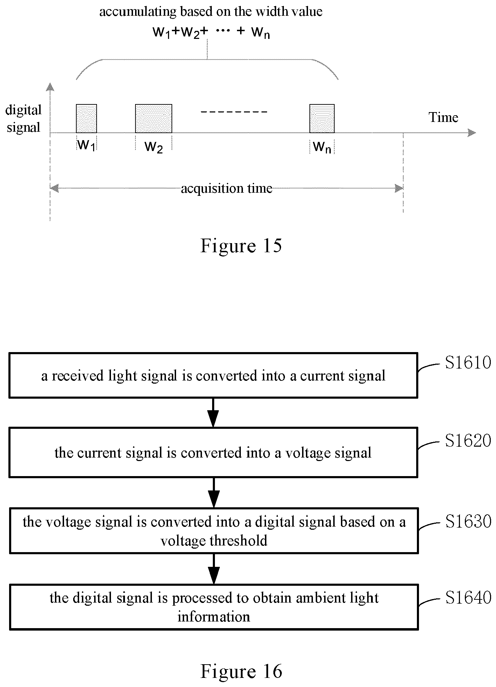

FIG. 15 is a schematic diagram of accumulating based on the width value according to an embodiment of the present application.

Referring to FIG. 15, after a single measurement, all width values of digital signals in the acquisition time are accumulated, obtaining w = w1 + w2 + ... + wn, where n is an integer greater than or equal to 1. There are multiple environmental results for multiple measurements. One way of processing multiple samplings is to accumulate the results of multiple samplings, and then filter the results with multiple sets of data to obtain ambient light data; another way is that multiple samplings are not accumulated, and the data is directly filtered to obtain ambient light data.

In some embodiments, in order to improve the quality of the voltage signals output by the electrical signal conditioning circuit, such as to improve the signal-to-noise ratio, the electrical signal conditioning circuit may be optimized.

For example, in addition to including a voltage conversion circuit and a first amplification circuit, the electrical signal conditioning circuit may further include: a filtering circuit and a second amplification circuit.

Please refer to FIG. 11 together, the filtering circuit is coupled to the first amplification circuit, and is configured to filter the voltage signals in M time units to obtain filtered voltage signals. The filtering circuit may include a capacitive component, and the like.

The second amplification circuit is coupled to the filtering circuit, and is configured to amplify the filtered voltage signals to obtain the voltage signals in M time units. The specific structure of the second amplification circuit may refer to the first amplification circuit, and is not described here again.

The embodiments of the present application can be applied to the detection of ambient light in a LiDAR, so as to adjust and control the LiDAR according to the environment, thereby achieving better performance of the LiDAR in resisting sunlight noise and ranging ability, and thereby improving personal and property safety of users.

Another aspect of the present application also provides a method for detecting ambient light.

Figure 16 is a flowchart illustrating a method for detecting ambient light according to an embodiment of the present application.

Referring to FIG 16, the method for detecting ambient light may include operation S1610 to operation S1640.

In operation S1610, a received light signal is converted into a current signal. Specifically, a photoelectric component may be used to convert the light signal into the current signal.

In operation S1620, the current signal is converted into a voltage signal. Specifically, refer to the relevant description of a reference electric signal conditioning circuit.

In operation S1630, the voltage signal is converted into a digital signal based on a voltage threshold. Specifically, refer to the relevant description of a detection processing unit.

In operation S1640, the digital signal is processed to obtain ambient light information. Specifically, refer to the relevant description of a digital processing unit.

In some embodiments, the ambient light signals received within M time units are converted into current signals within the M time units to superimpose the digital signals within the M time units to obtain an ambient light digital signal.

In some embodiments, the signals are superimposed in a manner of being aligned with a start time to obtain the ambient light digital signal within the M time units.

In some embodiments, the method above may further include processing a received laser signal based on the ambient light information to reduce interference of ambient light on the laser signal. Removing the interference of ambient light on the laser signal based on the ambient light digital signal can effectively improve the accuracy of processing data of a LiDAR, thereby enhancing the accuracy of the identification result.

Another aspect of the present application provides a device for detecting ambient light.

The device for detecting ambient light may include a photoelectric conversion module, a current-to-voltage module, a digital voltage signal module, and a digital processing module.

The photoelectric conversion module is configured to convert a received light signal into a current signal.

The current-to-voltage module is coupled to the photoelectric conversion module, and configured to convert the current signal into the voltage signal.

The digital voltage signal module is coupled to the current-to-voltage module, and configured to convert the voltage signal into the digital signal based on the voltage threshold.

The digital processing module is coupled to the digital voltage signal module, and configured to process the digital signal to obtain ambient light information.

Another aspect of the present application provides a radar.

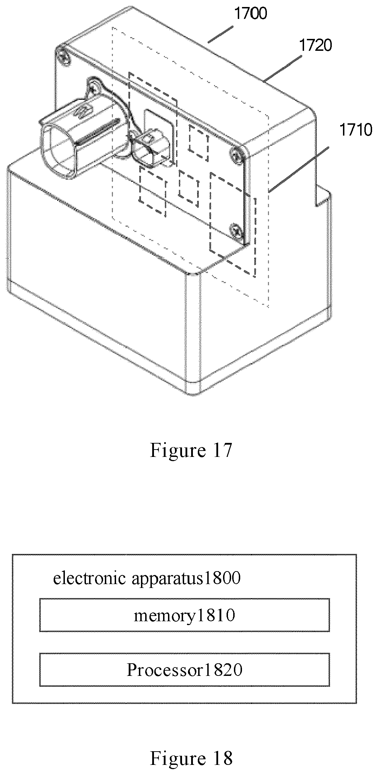

FIG. 17 is a structural diagram illustrating a radar according to an embodiment of the present application.

Referring to FIG. 17, the radar 1700 may include a circuit for detecting ambient light as described above, where the circuit for detecting ambient light is configured to obtain ambient light information. For example, the circuit for detecting ambient light may be provided on a circuit board 1710, and the circuit board 1710 may have multiple chips, processors, central control chips, and the like. The circuit board 1710 may be provided in a housing 1720. For example, a processor is coupled to the circuit for detecting ambient light, and is configured to process a received laser signal based on the ambient light information to reduce interference of ambient light on the laser signal.

The radar may be a radar subject to interference of ambient light intensity, such as a LiDAR. The radar may be a scanning radar or a non-scanning radar. An exemplary description will be given below with a scanning LiDAR.

For example, a MEMS-based LiDAR can dynamically adjust its scanning mode to focus on a specific object, collect detailed information about smaller and farther objects, and identify the objects. The inertial moment of the MEMS-based LiDAR is not large, so it can move rapidly. The speed is fast enough to track the 2D scanning mode in less than one second.

For example, a Flash LiDAR can quickly record the entire scene, avoiding various troubles caused by the movement of the target or the LiDAR during the scanning process. The radar system will use a micro-sensor array to collect reflected laser beams in different directions.

For example, a phased array LiDAR mounted with a row of emitters can change the direction of emitted laser beams by adjusting the relative phase of signals.

For example, a mechanically rotating LiDAR is an early developed LiDAR with relatively mature technology. However, the system structure of the mechanically rotating LiDAR is very complicated, and the prices of various core components are quite expensive, mainly including a laser, a scanner, optical components, a photoelectric detector, a receiving IC, position and navigation devices, and the like.

Taking a MEMS solid-state LiDAR as an example, since the MEMS solid-state LiDAR scans through the harmonic vibration of a scanning mirror, the scanning path is implemented in a spatial sequence, for example, a scanning field in a slow axis is implemented in a reciprocating manner from top to bottom in a vertical field corresponding to the slow axis. Therefore, the division of the detection range of the MEMS solid-state LiDAR is divided according to the field angle corresponding to the slow axis. For example, the vertical field angle corresponding to the slow axis of the MEMS solid-state LiDAR is -13° to 13°.

Taking a mechanical LiDAR in a scanning sensor as an example, since the mechanical LiDAR scans by driving an optical system to rotate 360 degrees through a mechanical driving device, a cylindrical detection area with the LiDAR as the center. Therefore, the detection range corresponding to a frame of data when the mechanical LiDAR rotates 360° is the detection range corresponding to the frame of data, so the division of a cycle detection range of the mechanical LiDAR is generally divided according to the rotation angle.

For a non-scanning LiDAR, the internal photoelectric component circuit and control component process the image and convert it into a digital signal recognizable by a computer, and then input it to the computer through a parallel port or a USB connection for image restoration by software.

Regarding the devices in the above embodiments, the specific manners in which the modules execute operations have been described in detail in the embodiments relating to the method thereof, and will not be described in detail here.

Another aspect of the present application provides an electronic apparatus.

Figure 18 is a structural diagram illustrating an electronic apparatus according to an embodiment of the present application.

Referring to FIG 18, the electronic apparatus 1800 may include a memory 1810 and a processor 1820. In addition, the electronic apparatus 1800 may be provided with a circuit for detecting ambient light or a radar.

The processor 1820 may be a central processing unit (CPU), or may be any other general processor, digital signal processor (DSP), application-specific integrated circuit (ASIC), field-programmable gate array (FPGA), or other programmable logic device, discrete gates or transistors, discrete hardware components, and the like. The general processor may be a microprocessor, or the processor may be any conventional processor, and the like.

The memory 1810 may include various types of storage units, such as a system memory, a read-only memory (ROM), and a permanent storage device. Wherein, the ROM may store static data or instructions required by the processor 1820 or other modules of the electronic apparatus. The permanent storage device may be a writable storage device. The permanent storage device may be a non-volatile storage device that does not lose instructions and data storage even when the electronic apparatus is powered off. In some embodiments, a large-capacity storage device (such as a magnetic or optical disk, flash memory) is used as the permanent storage device. In other embodiments, the permanent storage device may be a removable storage device (such as a floppy disk, optical drive). The system memory may be a writable storage device or a volatile writable storage device, such as a dynamic random access memory. The system memory may store some or all instructions and data required by the processor during operation. In addition, the memory 1810 may include a combination of any computer-readable storage media, including various types of semiconductor storage chips (such as DRAM, SRAM, SDRAM, flash memory, programmable read-only memory), disks and/or optical discs. In some embodiments, the memory 1810 may include removable storage devices that are readable and/or writable, such as laser discs (CDs), read-only digital versatile discs (such as DVD-ROMs, dual-layer DVD-ROMs), read-only Blu-ray discs, ultra-density discs, flash cards (such as SD cards, mini SD cards, Micro-SD cards, etc.), magnetic floppy disks, and the like. The computer-readable storage media do not include carrier waves and instantaneous electronic signals transmitted wirelessly or wired.

The memory 1810 stores executable codes, wherein when executed by the processor 1820, the executable codes cause the processor 1820 to execute parts or all of the method described above.

Moreover, the method according to the present application can also be implemented as a computer program or a computer program product, which includes computer program code instructions for executing parts or all steps of the method according to the present application.

Alternatively, the present application may also be implemented as a computer-readable storage medium (or a non-transitory machine-readable storage medium or a machine-readable storage medium) having executable codes (or computer programs or computer instruction codes) stored thereon, wherein when executed by a processor of an electronic apparatus (or a server) The processor executes parts or all steps of the method according to the present application.

Various embodiments of the present application have been described above. The above description is illustrative and not exhaustive, and is not limited to the disclosed embodiments. Many modifications and variations are apparent to those skilled in the art in view of the above teachings. The choice of terms used in the present specification is intended to best explain the principles of the various embodiments, practical applications, or improvements to technologies in the marketplace, or to enable others skilled in the art to understand the various embodiments disclosed in the present specification, without departing from the scope and spirit of the various embodiments disclosed.

## Claims

1. A circuit for detecting ambient light, comprising:
a photosensitive element, configured to convert a received light signal into a current signal;
an electrical signal conditioning circuit, coupled to the photosensitive element, configured to convert the current signal into a voltage signal;
a detection processing unit, coupled to the electrical signal conditioning circuit, configured to convert the voltage signal into a digital signal based on a voltage threshold;
a digital processing unit, coupled to the detection processing unit, configured to process the digital signal to obtain ambient light information.

2. The circuit according to claim 1, wherein the photosensitive element is configured to convert ambient light signals received in M time units into current signals in the M time units;
the digital processing unit is configured to superimpose the digital signals in the M time units to obtain an ambient light digital signal.

3. The circuit according to claim 2, wherein the digital processing unit is configured to superimpose the digital signals in the M time units in a manner aligned with a start time, to obtain the ambient light digital signal.

4. The circuit according to claim 2, wherein the digital processing unit is further configured to filter the ambient light digital signal, to obtain the ambient light information.

5. The circuit according to claim 2, wherein the photosensitive element is further configured to output P groups of current signals, each group of current signals comprising the current signals in the M time units;
the digital processing unit is configured to superimpose P groups of ambient light digital signals corresponding to the P groups of current signals in a time-aligned manner, to obtain the ambient light digital signal.

6. The circuit according to claim 2, wherein the electrical signal conditioning circuit comprises:
a voltage conversion circuit, coupled to the photosensitive element, configured to voltage convert the current signals in the M time units from the photosensitive element;
a first amplification circuit, coupled to the voltage conversion circuit, configured to amplify the voltage converted signals, to obtain the voltage signals in the M time units.

7. The circuit according to claim 2, wherein the detection processing unit comprises:
a threshold generating circuit, configured to output the voltage threshold;
a comparison circuit, coupled to the electrical signal conditioning circuit and the threshold generating circuit respectively, configured to compare the voltage signals with the voltage threshold in the M time units respectively, to obtain comparison results;
a histogram generating circuit, coupled to the comparison circuit, configured to generate a histogram based on the comparison results, to obtain the digital signal.

8. The circuit according to claim 6, wherein the detection processing unit comprises:
a threshold generating circuit, configured to output the voltage threshold;
a comparison circuit, coupled to the electrical signal conditioning circuit and the threshold generating circuit respectively, configured to compare the voltage signals with the voltage threshold in the M time units respectively to obtain comparison results;
an accumulation circuit, coupled to the comparison circuit, configured to obtain the digital signal based on an accumulation operation for the comparison results.

9. The circuit according to claim 8, wherein the accumulation circuit comprises:
a counter, coupled to the comparison circuit, configured to count a number of pulses to obtain the digital signal;
and/or
a carry chain, coupled to the comparison circuit, configured to calculate an addition operation result of pulse widths of the voltage signals in the M time units.

10. The circuit according to claim 6, wherein the electrical signal conditioning circuit further comprises:
a filtering circuit, coupled to the first amplification circuit, configured to filter the voltage signals in the M time units, to obtain filtered voltage signals;
a second amplification circuit, coupled to the filtering circuit, configured to amplify the filtered voltage signals, to obtain the voltage signals in the M time units.

11. A radar, comprising:
the circuit for detecting ambient light according to any one of claims 1 to 10, configured to obtain the ambient light information;
a processor, coupled to the circuit for detecting ambient light, configured to process a received laser signal based on the ambient light information to reduce interference of the ambient light on the laser signal.

12. A method for detecting ambient light, comprising:
converting a received light signal into a current signal;
converting the current signal into a voltage signal;
converting the voltage signal into a digital signal based on a voltage threshold;
processing the digital signal to obtain ambient light information.

13. The method according to claim 12, further comprising:
processing a received laser signal based on the ambient light information, to reduce interference of the ambient light on the laser signal.
